(19) Europäisches Patentamt
European Patent Office
Office européen des brevets

(11) **EP 4 653 968 A1**

(12) **EUROPEAN PATENT APPLICATION**

(43) Date of publication:
**26.11.2025 Bulletin 2025/48**

(21) Application number: **24177687.1**

(22) Date of filing: **23.05.2024**

(51) International Patent Classification (IPC):
*G05B 23/02* (2006.01)

(52) Cooperative Patent Classification (CPC):
**G05B 23/0272; G05B 23/024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GEA Refrigeration Technologies GmbH**
**13509 Berlin (DE)**

(72) Inventors:
• **HACK, Johannes**
**13509 Berlin (DE)**
• **HAUCK, Lorena**
**13509 Berlin (DE)**
• **KAUTH, Felix**
**13509 Berlin (DE)**
• **SCHELLEKENS, Jeroen**
**13509 Berlin (DE)**

(74) Representative: **Bardehle Pagenberg Partnerschaft mbB**
**Patentanwälte Rechtsanwälte**
**Prinzregentenplatz 7**
**81675 München (DE)**

(54) **METHOD AND DEVICE FOR ASSISTING IN A FAULT RESOLUTION PROCESS FOR RESOLVING ONE OR MORE FAULTS AT ONE OR MORE PIECES OF INDUSTRIAL EQUIPMENT**

(57) A computer-implemented method for assisting in a fault resolution process for resolving one or more faults at one or more pieces of industrial equipment, the method comprising: providing a plurality of troubleshooting information, the plurality of troubleshooting information comprising: one or more fault-specific recommendations configured to assist the fault resolution process; for each fault-specific recommendation, a skip option to indicate that the fault-specific recommendation has been skipped; for each fault-specific recommendation, a done option to indicate that the fault-specific recommendation has been performed; selecting at least one operational parameter of a plurality of operational parameters using a first machine learning model; displaying, in an operational data graph the at least one operational parameter. In addition, the present disclosure relates to a corresponding device, system as well as to a corresponding computer program.

Fig. 3

**Description**

**Technical field**

The present invention relates to a computer-implemented method for assisting in a fault resolution process for resolving one or more faults at one or more pieces of industrial equipment as well as to a corresponding device, system and computer program.

**Technical background**

Industrial refrigeration installations play a pivotal role in a wide range of industrial processes, offering temperature control solutions essential for various industries and applications. These systems are designed to maintain specific temperature and humidity levels within industrial settings, ensuring the efficient and safe operation of numerous processes.

In the food and beverage industry, industrial refrigeration is indispensable for preserving perishable goods and maintaining product quality. Cold storage facilities, meat processing plants, and breweries heavily rely on these installations. Likewise, the pharmaceutical sector depends on refrigeration to store and transport temperature-sensitive medications and vaccines, safeguarding public health.

Chemical manufacturing facilities use refrigeration to enable controlled chemical reactions and prevent hazardous reactions due to high temperatures. In the petrochemical industry, cooling systems are crucial for liquefying gases and ensuring the safe handling of volatile materials. The manufacturing of plastics, metals, and electronics demands precise temperature control to enhance product quality and safety.

Industrial refrigeration also plays a crucial role in energy production, enabling power plants to manage cooling processes and maintain equipment performance.

Refrigeration technology is thus essential for many applications making a smooth and efficient operation of the refrigeration installation a critical aspect to avoid machine failures and shutdowns.

Conventional methods of fault resolution for avoiding machine failures and shutdown, are mostly handled in a reactive manner and require expert handling. A standard fault resolution process may be described as follow: A fault is noticed by an operator of an industrial refrigerator. The operator then notifies an expert technician that a fault has occurred, and that help is required. The operator may not be able to distinguish between a fault situation which requires immediate attention (i.e., potential shutdown faults) or fault situation which may be dealt with at a later point in time (i.e., warning faults). Since no distinction is made, each fault is treated as a potential shutdown situation. However, expert technicians are not constantly available. The fault will eventually be resolved but may lead to unnecessary shutdowns in the meantime. A disadvantage of conventional methods thus is the opacity on machine operation. In other words, the machine operator is missing operating information about the machine. A further disadvantage of conventional methods is the requirement of an expert technician to be on site for solving the fault. Another disadvantage of the conventional methods is that the knowledge regarding the machine and the fault resolution process is concentrated in the expert technicians which means that an expert technician is always required to solve a fault. This leads to an inefficient use of resources and to machines that are not optimally maintained.

In view of these disadvantages, the presently known fault resolution processes may not always lead to the desired results. There is thus a need to improve the presently used fault resolution process such that the incidents are not handled on a reactive basis.

Against this background, an object of the present invention is to address one or more or all of the above-mentioned disadvantages.

**Summary of the invention**

The above-mentioned objects and other objects, which become apparent from the following description, are solved by the subject-matter of the independent claims. Preferred embodiments are subject of the dependent claims.

A 1st embodiment of the invention is directed to a computer-implemented method for assisting in a fault resolution process for resolving one or more faults at one or more pieces of industrial equipment, the method comprising: providing a plurality of troubleshooting information, the plurality of troubleshooting information comprising: one or more fault-specific recommendations configured to assist the fault resolution process; for each fault-specific recommendation, a skip option to indicate that the fault-specific recommendation has been skipped; for each fault-specific recommendation, a done option to indicate that the fault-specific recommendation has been performed; selecting at least one operational parameter of a plurality of operational parameters using a first machine learning model; displaying, in an operational data graph the at least one operational parameter.

Providing a plurality of troubleshooting information may have the advantage of providing the service technician and/or the machine operator with a preprocessed overview of important operational parameters. Such preprocessed overview of operational parameters may help the user in solving faults more quickly or even enable users to solve fault at all. Accordingly, the preprocessed overview of operational parameters may increase the life span of the industrial equipment. Since the preprocessed overview may lead to quicker resolution of a fault, it may have the advantage of decreasing downtime of an industrial equipment.

The one or more fault-specific recommendations configured to assist the fault resolution process may further enhance the advantages mentioned above in term of providing an overview about relevant operational parameters to the user. Providing a skip option for each fault-specific recommendation may enable the technician to adjust the resolution process to the specific fault situation. There may be a situation in which a recommendation that is common for a specific fault is not suitable, the skip option enables the user to indicate this. It may also enable the technician to track the process of the resolution process. Providing a done option for each fault-specific recommendation may enable the user to indicate that a specific recommendation has been performed. This information may be used for future analysis about the effectiveness of the provided recommendations. This may also help in tracking the fault resolution process.

Displaying, in an operational data graph the at least one operational parameter may enhance the advantages mentioned above with regards to providing an overview, improving the fault resolution process and the lifetime of the industrial equipment. Moreover, the operational data graph provides a visual representation of relevant information which may enable the technician to grasp the fault situation even quicker. Selecting at least one operational parameter of a plurality of operational parameters using a first machine learning model may ensure that the most relevant operational parameters are presented to the technician. The machine learning model may be able to recognize complex patterns between the operational parameters and the fault situation. The machine learning model may also be able to perform a selection of the relevant parameters in a quick manner.

The one or more pieces of equipment may be an industrial refrigerator. Using the proposed fault resolution process to resolve one or more faults that occur at an industrial refrigerator may be advantageous since the industrial refrigerator provides a plurality of sensor readings for further analysis. Moreover, an industrial refrigerator may be suitable for being repaired following the fault-specific recommendations.

According to a 2nd embodiment, providing the plurality of troubleshooting information further comprises: providing a machine filter that enables selecting a piece of industrial equipment of the one or more pieces of industrial equipment; providing a fault filter that enables selecting a fault of the one or more faults at the selected piece of industrial equipment, wherein, preferably, the one or more fault-specific recommendations are associated with the selected fault.

Providing a machine filter that enables selecting a piece of industrial equipment of the one or more pieces of industrial equipment may enable the technician to adapt the troubleshooting information based on a selected piece of equipment. This may improve the fault resolution process. Providing a fault filter that enables selecting a fault of the one or more faults at the selected piece of industrial equipment may enable the technician to further adapt the troubleshooting information to a specific type of fault. The one or more fault-specific recommendations being associated with the selected fault may provide the advantage of adapting the recommendations based on the specific fault situation. Combining the option of selecting a specific machine and a specific fault at a machine may improve the resolution process by enabling the technician to react in a more efficient manner.

According to a 3rd embodiment, the method further comprises obtaining troubleshooting feedback information, and training a second machine learning model based on the troubleshooting feedback information; wherein the second machine learning model is trained to perform one or more of: topic modelling; name entity recognition; sentiment analysis; keyword extraction.

Obtaining troubleshooting feedback information may enable analysis of the performed fault resolution processes which may guide improvements of the provided recommendations.

Training a second machine learning model based on the troubleshooting feedback information may provide an efficient manner in which to analyze the obtained feedback information. Using a machine learning model may have the advantage of recognizing intricate patterns between the input variables (i.e., the feedback). The machine learning model may also be able to uncover recurring issues, potential failure points and patterns based on the feedback it receives. Training the second machine learning model to perform one or more of: topic modelling; name entity recognition; sentiment analysis; keyword extraction may be the most performant manner in which to analyze the provided feedback. Topic modeling may have the advantage of representing themes or underlying topics of the issues described in the feedback. Name entity recognition may be able to categorize issues and link them to potential causes within the operational data. Sentiment analysis may help in gauging the severity of issues and/or the effectiveness of specific solutions. Finally, keyword extraction may identify the most frequently used keywords and phrases and thus reveal common problem areas and/or components where faults occur. Accordingly, the proposed tasks performed by the trained second machine learning model may be most suitable for improving the recommendations and the overall fault resolution process.

According to a 4th embodiment, the one or more fault-specific recommendations are based on the output of the trained second machine learning model.

Basing the one or more fault-specific recommendations on the output of the trained second machine learning model may improve the quality of the recommendations. Recommendations that are of higher quality, for example because they require the technician to use less oil during the fault resolution process, may improve the overall resolution process.

According to a 5th embodiment, the first machine learning model is trained using one or more of: supervised machine learning; unsupervised machine learning.

Training the first machine learning model using supervised machine learning may have the advantage of being more accurate and showing a better performance. Moreover, supervised machine learning may enable more targeted learning which may enable the model to perform well on specific tasks. Training the first machine learning model using unsupervised machine learning may not require labeled training data and may thus be easier to train. Moreover, unsupervised machine learning may also be effective with regards to anomaly detection which is crucial when identifying faults.

According to a 6th embodiment, the plurality of troubleshooting information further comprising: confidence information indicating the confidence of the determination made by the second machine learning model.

Confidence information indicating the confidence of the determination made by the machine learning model may enable the technician to make a more informed decision on how to resolve a specific fault. For example, if a recommendation is given to the technician but the confidence is rather low, the technician may decide not to perform the recommended action. This may improve the fault resolution process by providing the technician with additional information.

According to a 7th embodiment, the plurality of troubleshooting information further comprises information about one or more of: a current value associated with the selected fault; an ideal value associated with the selected fault.

The troubleshooting information comprising a current value associated with the selected fault may enable the technician to gain a quick understanding of the current fault situation. The troubleshooting information comprising an ideal value associated with the selected fault may provide a technician with a benchmark for estimating the severity of the fault. Combining the current value associated with the selected fault and the ideal value associated with the selected fault may enable the technician to quickly pinpoint the fault by comparing the two values. This may enable the technician to react in a quick manner which may improve the overall fault resolution process.

According to an 8th embodiment, the step of selecting the at least one operational parameter comprises: obtaining a plurality of signals associated with a plurality of parameters, converting each of the plurality of signals into a normed signal to obtain a plurality of normed signals; computing for each of the plurality of normed signals a maximum deviation to obtain a plurality of maximum deviation values; selecting one or more relevant parameters from the plurality of parameters based on the plurality of maximum deviation values; selecting one or more key parameters as the plurality of operational parameters based on performing further analysis on the plurality of relevant parameters.

Obtaining a plurality of signals associated with a plurality of parameters may increase the robustness of the analysis. Converting each of the plurality of signals into a normed signal to obtain a plurality of normed signals may enable further processing of the obtained signals and may especially enable comparison between signals. Computing for each of the plurality of normed signals a maximum deviation to obtain a plurality of maximum deviation values may provide an assessment value that shows a good performance. In other words, the maximum deviation value may be suitable for analyzing the importance of different operational parameters and making a decision about which parameters to display to the technician. Selecting a plurality of relevant parameters from the plurality of parameters based on the plurality of maximum deviation values may, during the resolution process, enable the focus on relevant parameters. This may speed up the resolution process. Selecting a plurality of key parameters as the plurality of operational parameters based on performing further analysis on the plurality of relevant parameters provides an option to further analyze the relevant operational parameters and only focus on the key parameters. This may further enhance the fault resolution process.

According to a 9th embodiment, providing the plurality of troubleshooting information further comprises providing a time range option for selecting a time range; wherein the operational data graph adjusts according to the selected time range.

Providing a time range option for selecting a time range wherein the operational data graph adjusts according to the selected time range may provide the advantage of analyzing operational data during a specific time frame. The ability to investigate the operational parameter for a specific time range may improve the understanding of the fault. A technician could for example investigate the operational data three hours before the fault occurred to scan for any unusual values. This may lead to an improved resolution process.

According to a 10th embodiment, providing the plurality of troubleshooting information further comprises providing a plurality of scale options for selecting one or more of: a pressure scale; a temperature scale; a capacity scale; a speed scale; a power scale; wherein the operational graph displays the one or more selected scales.

Providing a plurality of scale options for selecting one or more of: a pressure scale; a temperature scale; a capacity scale; a speed scale; a power scale, wherein the operational graph displays the one or more selected scales may provide the advantage of configuring the operational graph with respect to the operational parameters that are shown in the graph. Being able to select and deselect one or more scales may also enable the display of multiple operational parameters in one operational parameter graph which may avoid clutter and may lead to a more concise representation.

The selection and deselection of scales may also enable the technician to remove scales that are not required for the understanding of the displayed operational parameters. All of these features may improve the overall fault resolution process.

According to an 11th embodiment, method further comprises providing a plurality of fault analysis information comprising one or more of: shutdown information; warning information; fault history information.

Providing a plurality of fault analysis information may enable the technician to gain a deeper understanding of a fault situation. This may help the technician during the fault resolution process. The fault analysis information comprising shutdown information and warning information may help the technician to categorize the severity of the fault. It may also guide the technician when deciding which fault to resolve first. The fault analysis information comprising fault history information may further provide the technician about historical information about shutdowns and warnings and their resolution status.

According to a 12th embodiment, providing the plurality of fault analysis information further comprises one or more of: providing a fault analysis machine option; providing a fault analysis date range option; providing a fault analysis fault status option; providing a fault analysis fault name option.

Providing a fault analysis machine option may enable the technician to choose a specific piece of industrial equipment for further analysis. Providing a fault analysis date range option may provide the advantage of analyzing specific time windows. The technician could, for example, focus on a specific time right before the fault occurred and analyze the behavior of the operational parameters. Providing a fault analysis fault status option may enable the technician to distinguish between pending faults and solved fault. Selecting solved faults may enable the technician to analyze historical faults, pending fault on the other hand may direct the technician towards pending faults that require solving. Providing a fault analysis fault name option may provide the advantage of analyzing a specific type of fault such as "Low Suction Pressure", "Sensor Failure" or "Motor Current Load".

A 13th embodiment of the invention is directed to a device for assisting in a fault resolution process for resolving one or more faults at one or more pieces of industrial equipment, the device comprising means for performing the method of any one of the embodiments 1 to 12.

A 14th embodiment of the invention is directed to a system comprising the device of embodiment 13, the system further comprising: one or more sensors configured to obtain a plurality of signals associated with a plurality of parameters.

The one or more sensors configured to obtain a plurality of signals associated with a plurality of parameters may enable the analysis of real-time sensor information. This analysis may form the basis to evaluate whether a fault is occurring at a piece of industrial equipment. This information may also be used to estimate the severity of the fault, for example, whether to categorize the fault as a shutdown or a warning. Obtaining more than one signal may also improve the robustness of the analysis.

A 15th embodiment of the invention is directed to a computer program comprising instructions which, when executed by a computer, cause the computer to carry out the method of any one of the embodiments 1 to 12.

## Brief description of the figures

Various aspects of the present invention are described in more detail in the following by reference to the accompanying figures without the present invention being limited to the embodiments of these figures.

Fig. 1    illustrates a main page according to an embodiment of the present invention;

Fig. 2    illustrates a fault analysis page according to an embodiment of the present invention;

Fig. 3    illustrates a troubleshooting page according to an embodiment of the present invention;

Fig. 4    illustrates a recommendation information component according to an embodiment of the present invention;

Fig. 5    illustrates an operational parameter component according to an embodiment of the present invention;

Fig. 6    illustrates an evaluation of operational parameters according to an embodiment of the present invention;

Fig. 7    illustrates a further evaluation of operational parameters according to an embodiment of the present invention.

## Detailed description of preferred embodiments

In the following, the invention is described with reference to the accompanying figures in more detail. However, the present invention can also be used in other embodiments not explicitly disclosed hereafter. As detailed below, the embodiments are compatible with each other, and individual features of one embodiment may also be applied to another embodiment.

Throughout the figures and description, the same reference numerals refer to the same elements, unless stated otherwise. The figures may not be drawn to scale, and the relative size, proportions, and depiction of elements in the figures may be exaggerated for the purpose of clarity, illustration, and convenience. The figures do not limit the scope of the claims but merely support the understanding of the invention.

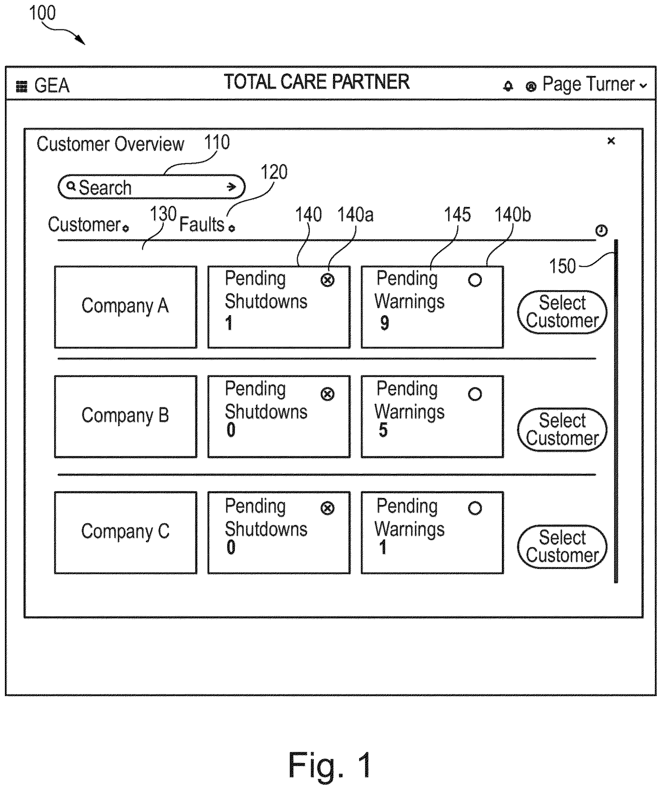

Fig. 1 shows a main page 100 of a graphical user interface that provides a customer overview of faults that are occurring at the customer side. A search bar 110 that is exemplarily located at the top of the page may allow a service provider to search through the customer and fault information. The main page 100 also comprises a control panel 120 that is exemplarily located below the search bar and comprises the subfields "customer" followed by double-sided arrow that is pointing up and down 121 and "fault" followed by double-sided arrow that is pointing up and down 122. The control panel 120 may allow configuration of the information component 130 that is displayed below the control panel 120. The main page 100 also comprises a scroll bar 150 that may allow an operator to seamlessly navigate between different customers.

In the example three customers are displayed on the information component 130, namely "Company A", "Company B" and "Company C". The information component 130 may also comprise two tiles 140, 145 for each customer that may provide information about the severity of current faults. The example shows a first tile named "pending shutdown" 140 and a second tile named "pending warning" 145. The pending shutdown tile comprises a red component 140a. Since red is regarded as an alarming color this may indicate to an operator to act accordingly. The pending warning tile comprises a yellow component 140b. Since yellow is regarded as a warning color this may indicate to an operator to act accordingly. Each of the two tiles 140, 145 also comprises a number which may indicate the number of faults that could possibly cause a shutdown or a warning. Note that more or less than two tiles may also be represented on the information component 130. The information component 130 may help the operator and/or service provider to identify which machine to take care of. Moreover, a push notification may be sent to the user to indicate a pending shutdown event or a pending warning event.

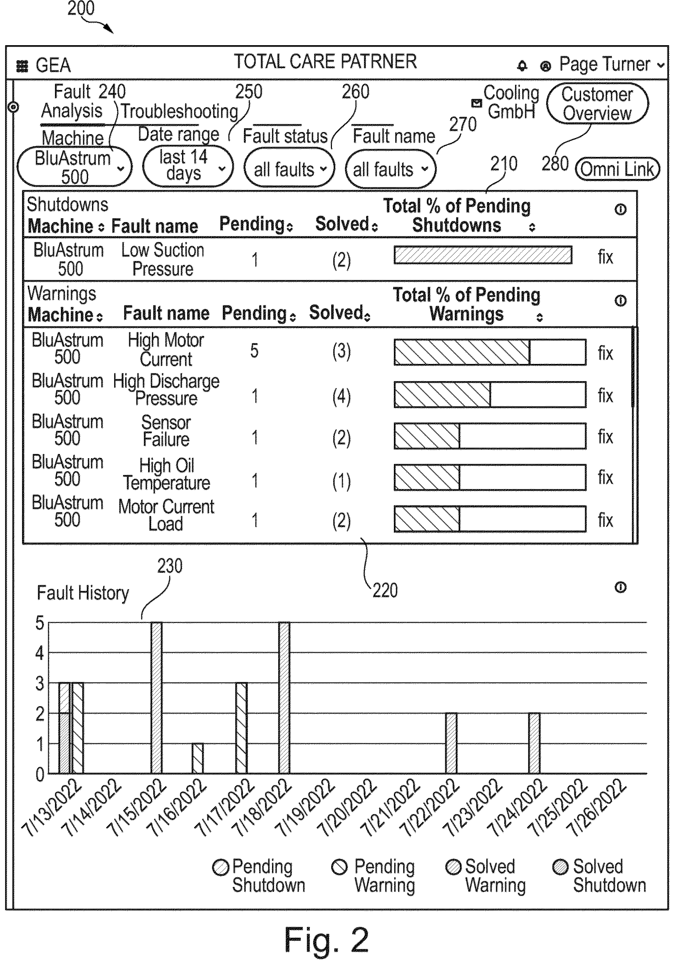

Moreover, the information component 130 comprises a button named "select customer" 160 for each customer which may, when selected, enable an operator to retrieve further information about the selected customer. Selecting a specific customer may for example lead the operator to a fault analysis page 200 that is described in more detail in Fig. 2.

Fig. 2 shows a fault analysis page 200 of a graphical user interface. As mentioned, the fault analysis page 200 may be reached through selecting a specific customer on the main page 100. The fault analysis page 200 may comprise three information components, namely a shutdown information component 210, a warning information component 220 and a fault history information component 230. The information components 210, 220, 230 may help the user to immediately grasp the plant operation and any active warnings and/or shutdowns.

The fault analysis page may also comprise a plurality of control fields such as a machine control field 240, a date range control field 250, a fault status control field 260 and a fault name control field 270. The plurality of control fields may provide the service provider and/or operator the option to configure the information that is displayed in the shutdown information component 210, warning information component 220 and/or fault history information component 230. This may provide the user with the advantage of speeding up the fault analysis. Instead of scanning large amounts of information, the user may simply select specific requirements and narrow down the information that is presented. The example of Fig. 2 shows that "BluAstrum 500" is selected in the machine control field 240, "last 14 days" is selected in the data range control field 250, "all faults" is selected in both, the fault status control field 260 and in the fault name control field 270. The corresponding information components 210, 220, 230 are adjusted to the selected options.

The shutdown information component 210 and the warnings information component 220 may comprise information about the machine, the fault name, the number of pending shutdowns/warnings, the number of solved shutdowns/warnings and the total % of pending shutdowns/warnings. The information may be displayed in a table format. The shown information may have the advantage of providing the user with insights into the kind of warnings and/or shutdowns and the amounts of warnings and/or shutdowns. The machine information may provide the name of the affected machine. In the example of Fig. 2 the name of the machine is "BluAstrum 500". The fault name information may describe the fault on a high level, examples shown in Fig. 2 include "High Motor Current", "High Discharge Pressure", "Sensor Failure", "High Oil Temperature" and "Motor Current Load". Accordingly, the fault name information may have the advantage of providing the user with a summary of the fault that may enable the user to react to the fault more quickly and in an appropriate manner. The pending information may provide the user with the number of faults that are currently pending and require action to be taken. This may have the advantage of indicating the current fault situation to the user. The user may quickly grasp whether action should be taken to solve a fault. The solved information may provide the user with the number of faults that occurred in the past and have already been solved. This information may be advantageous to gain a holistic understanding of the faults that occur at a specific machine. The total % of pending shutdowns or total % of pending warnings may show the percentage of shutdowns and warnings that are currently pending out of all the shutdowns that have appeared. As shown in Fig. 2, this information may be displayed in a bar format which may enhance interpretability of the displayed information.

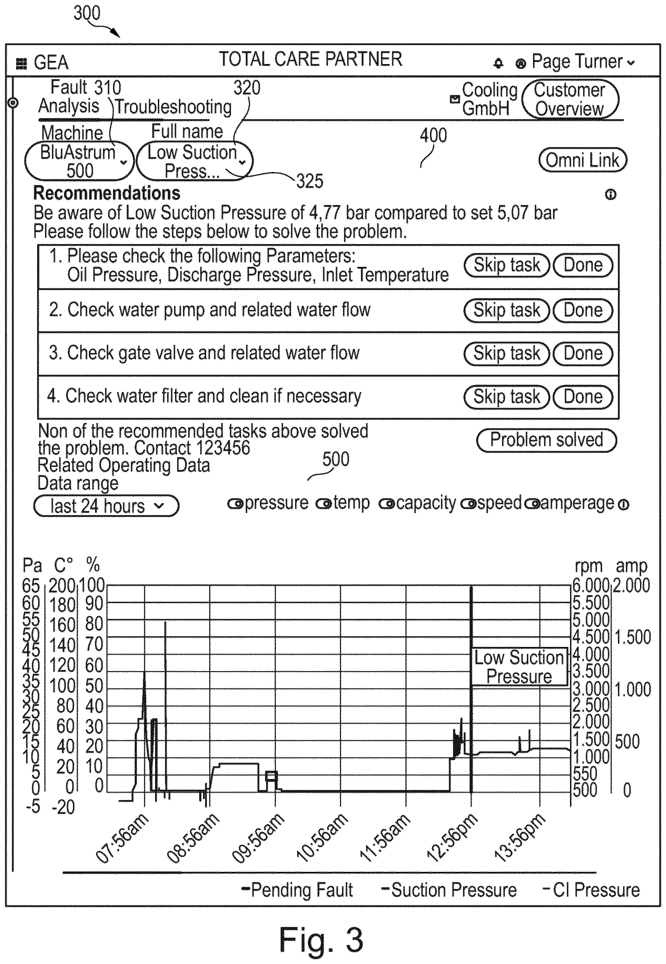

Moreover, each fault that is displayed in the shutdown information component 210 or the warnings information component 220 may be associated with an option that, when selected, leads the user to a troubleshooting page 300 which may help the user to solve a specific warning or shutdown. The troubleshooting page is described in more detail in Fig. 3. In the example shown in Fig. 2 the option is implemented with a button labeled "fix" that is displayed at the right side of the information components 210, 220.

The fault history information component 230 may provide information about the historical trajectory of occurred faults and may comprise information such as the date at which a fault occurred and the number of faults that occurred at a specific date. The fault history information may also be displayed in such a manner that pending faults and solved fault can be distinguished. In the example provided in Fig. 2, the fault history information is displayed in a bar chart. The y-axis of the bar chart indicates the number of faults, the x-axis of the bar chart indicates the date and the bars themselves indicate the pending faults and the solved faults. The faults can further be separated into warnings and shutdowns and pending warnings/shutdowns and solved warnings/shutdowns. The fault history information may provide the advantage of presenting the user with a holistic overview of the fault status. This may lead to an enhanced understanding of faults by the user and may enable the user to improve fault resolution.

The shutdown information component 210 and the warnings information component 220 may comprise a control bar that may comprise a machine field, a fault name field, a pending field, a solved field and a total % of pending shutdowns field. The field of the control bar may allow the user to configure the associated information. For example, the pending field may enable the user to order the shutdown information or the warnings information by the number of pending shutdowns or warnings. The fault analysis page 200 may also display the customer that is associated with the fault information. In the example of Fig. 2 this feature is shown in the top-right hand corner and the respective customer is displayed as "Company A". This feature may help the user in associating the displayed information with a specific customer without additional effort. Moreover, a customer overview option 280 that may enable the user to navigate to the main page 100 may be provided on the fault analysis page 200.

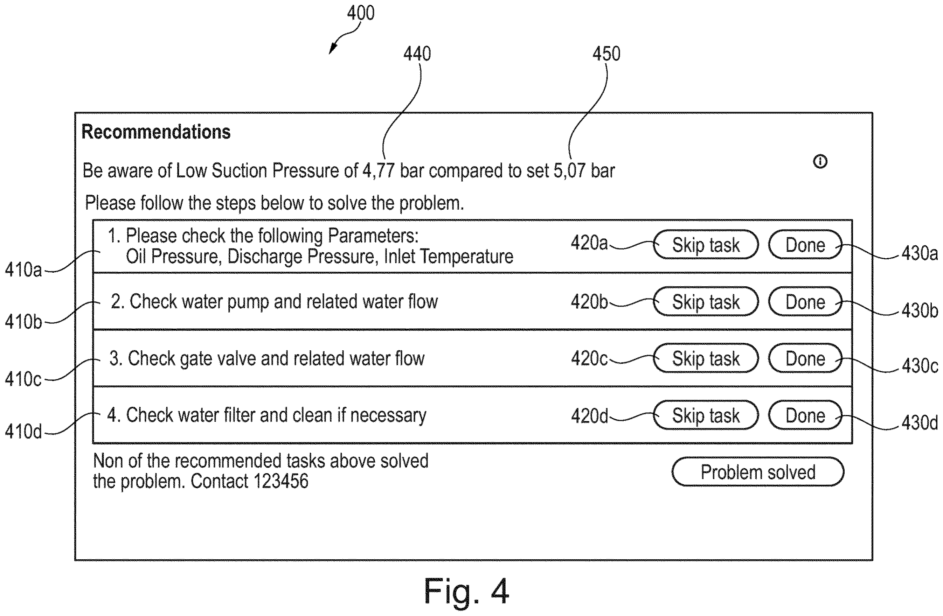

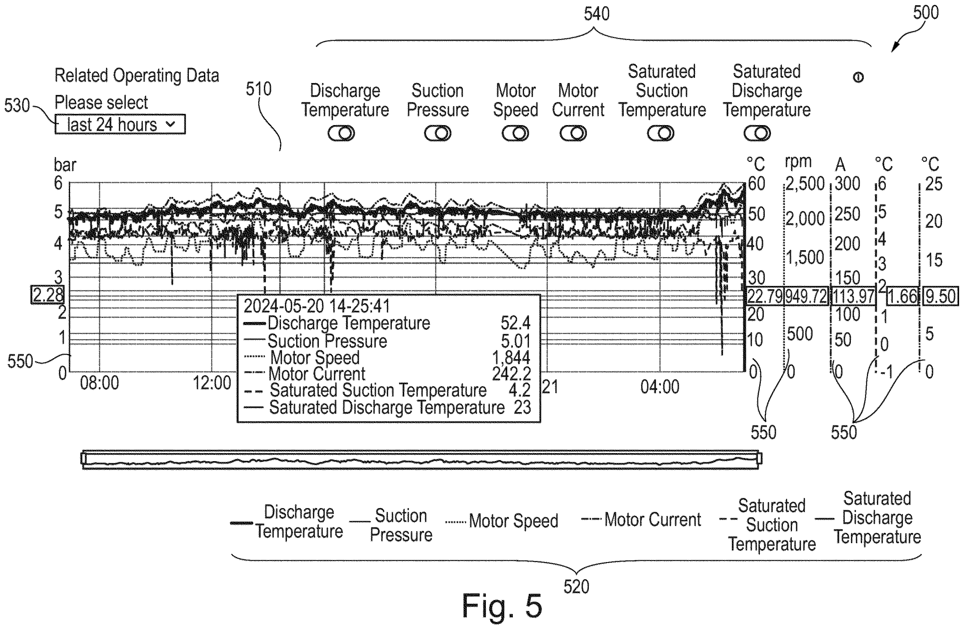

Fig. 3 shows a troubleshooting page 300 of a graphical user interface. As mentioned with regards to Fig. 2 this page may be reached through the fault analysis page 200. Likewise, the user may switch from the troubleshooting page 300 to the fault analysis page 200. A fault that was selected in the fault analysis page 200 may automatically be selected when switching to the troubleshooting page 300. Similar to the fault analysis page 200, the troubleshooting page 300 may also provide the customer with the option of navigating to the main page 100 and may also display the customer that is associated with the displayed information. The troubleshooting page may comprise a recommendation information component 400 that is described in more detail with regards to Fig. 4 and an operational parameter information component 500 that is described in more detail with regards to the embodiment according to Fig. 5. To configure the information that is displayed in the recommendation information component 400 and the operational parameter information component 500, the troubleshooting page 300 may provide one or more control fields. The control fields may comprise a machine control field 310 and a fault name control field 320. The machine control field may be a filter. The fault name control field 320 may be a filter. Fig. 3 shows that "BluAstrum 500" is selected as the machine and "Low Suction Pressure" is selected as the fault name. The recommendation information component 400 and the operational parameter information component 500 may be adapted accordingly. The troubleshooting page 300 may enable the user to act based upon the information gained from the fault analysis page 200.

Fig. 4 shows the recommendation information component 400 which may comprise a summary of the selected fault and one or more recommendations 410a-410d. The summary of the selected fault may display a current value of the selected fault 440 and an ideal value of the selected fault 450. The example in Fig. 4 shows the operational parameter "Low Suction Pressure" that is selected as the fault has a current value of 4,77 bar and should have an ideal value of 5,07. This may be advantageous since it provides the user with the most important information for comprehending the fault and reacting quickly. This summary is then followed by the recommendations 410a-410d that guide the user through the resolution process. Those recommendations may be fault-specific, meaning, they relate to the fault that has been selected 325 in the fault name control field 320. The recommendations 410a-410d may improve the fault resolution process by providing the user with recommendations on how to fix the fault. The recommendations may be based on a decision tree logic. Basing the recommendations on a decision tree logic may improve the quality of the recommendation. The recommendations are ranked from 1 to X, however, the user may not have to execute the recommendations in the ranked order. The ranked order may provide the user with a suggestion on the order in which to perform the recommended actions. The ranked order may support the user in solving the faults. However, the ranked order may not restrict the user in performing the recommended action and may leave the user the option to respond to individual circumstances of each fault situation. The recommendation itself may be provided in one sentence such as "Please check the following Parameters: Oil Pressure, Discharge Pressure, Inlet Temperature" or "Check water pump and related water flow" or "Check gate valve and related water flow". This may help the user in acting quickly.

The recommendation information component 400 may also provide the user with the option of indicating whether a recommendation has been skipped 420a-420d or performed 430a-430d. Furthermore, the recommendation information component 400 may provide the user with an option to indicate that a problem has been solved. Indicating that a problem has been solved may change the status of the fault form "pending" to "solved". Moreover, indicating that a problem has been solved may make the recommendations 410a-410d disappear. In case the user indicates that the problem is solved but none of the recommendations 410a-410d have been indicated as having been performed 430a-430d, the user may be provided with a prompt to indicate how the problem was solved. Finally, the recommendation information component 400 may also provide the user with contact information in case that execution of the provided recommendations did not solve the problem.

Although not shown, the user may provide feedback which may be analyzed to improve the recommendations. More specifically, the feedback may be provided in text form. The text may then be analyzed by a machine learning model. The machine learning model may be trained to perform one or more of topic modeling, name entity recognition, sentiment analysis and/or keyword extraction. This analysis may have the advantage of extracting key terms, phrases, and patterns from the feedback. More specifically, name entity recognition may help categorizing a fault and linking a fault to potential causes within the operational data. Sentiment analysis may determine the overall sentiment (i.e., positive, negative, neutral) of the provided feedback. This may improve the assessment of the severity of a fault and/or an effectiveness of a solution. Further, topic modeling may identify clusters of words that frequently occur together and improve categorization of faults. Keyword extraction may help identifying frequently used words and phrases. The identification of frequently used words and phrases my reveal common problem areas and components that experience the respective faults.

Using a machine learning guided feedback process may have the advantage of improving the recommendations that are provided to the user, for example, by uncovering recurring issues and potential failure points. Improved recommendations may further provide the advantage of improving the fault resolution process and the lifetime of the machine. To further enhance the recommendations, the feedback that is provided by the machine learning models may be analyzed and adapted by experts.

Fig. 5 shows an operational parameter information component 500 which may display operational data related to the selected fault. The operational data information component may comprise a time range control field 530 that may enable the user to specify a time range for which the operational data should be displayed. The operational data may then be displayed in an operational data graph 510 in the form of a line graph. The x-axis of the line graph may indicate the date that the operational data was recorded. The line graph may have a plurality of y-axis indicating the parameter scales 550 of the operational parameter. For example, the line graph that is shown in Fig. 5 has five y-axes, one for each unit (i.e., pressure, a first temperature, speed, current, a second temperature and a third temperature) of the respective operational parameters. The operational data information component may also comprise scale control units 540 for selecting and deselecting a y-axis. This may enable the user to adjust the displayed information and aid the fault resolution process. The operational information component 500 may also include an indication at which point in time the fault occurred. Although not shown in Fig. 5, this may be implemented through a vertical line. Finally, the operational data component may comprise a legend describing the operational parameters 520 that are displayed in the graph.

Although not shown, the operational parameters displayed in the operational parameter information component 500 have previously been identified as relevant operational parameters. In other words, operational parameters that are relevant for solving the selected fault. The identification of relevant operational parameters may be performed using a machine learning model. The machine learning model may be trained on historical operational data which may include sensor readings during alarm states and sensor readings during normal states. Supervised machine learning techniques such as decision trees, random forests and/or support vector machines may be used to train the machine learning model. Unsupervised machine learning techniques such as k-means and hierarchical clustering may also be used to train the machine learning model. Moreover, techniques such as Shapley Additive explanation may be used to identify relevant operational parameters. Using a machine learning model may have the advantage of identifying complex relationships between operational parameters and alarm states. Moreover, machine learning models may excel in identifying relevant operational parameters which may improve the fault resolution process. Finally, the machine learning approach may be complemented with expert knowledge. This may have the advantage of combining algorithmic knowledge with hands on experience knowledge and further improve the resolution process. Moreover, the operational data information component may also display the confidence with which a parameter is regarded as relevant by the machine learning model. This may further improve the resolution process.

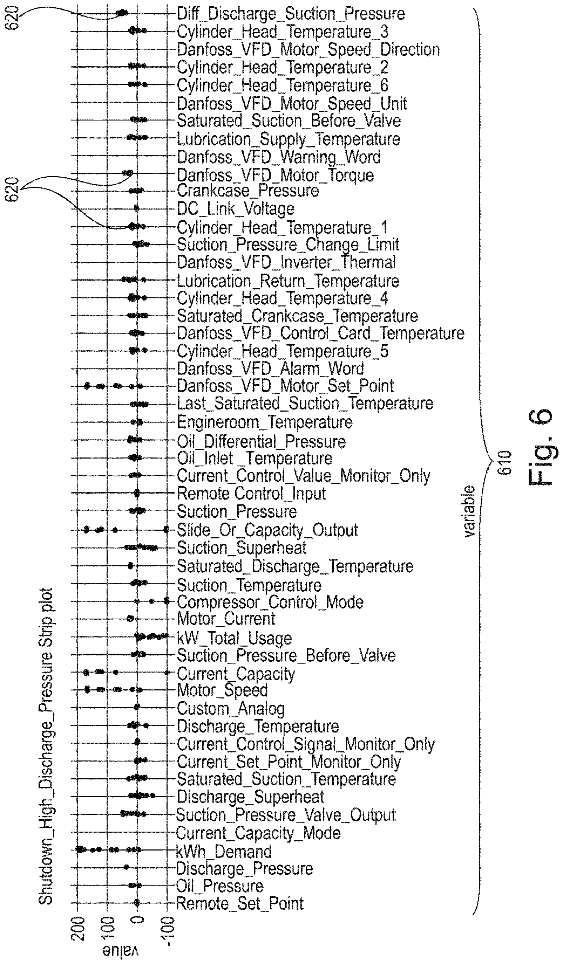

Fig. 6 shows a strip plot that analyzes a shutdown due to high discharge pressure. The x-axis indicates the operational parameter 610 such as "Suction Temperature", "Motor Current" and "Discharge Superheat". The y-axis indicates the assessment value that was derived during the analysis and each dot in the plot indicates a shutdown that has occurred. The analysis may comprise the calculation of a norm signal as follows:

$$Norm\ Signal_i = \frac{Signal_i}{Nominal\ Value}$$

where i may indicate the number of minutes that are assessed (i.e., predetermined time window). The dot that is indicated in the strip plot (i.e., maximum deviation 620) may be derived by calculating the maximum deviation over the predetermined time window as follows:

$$Maximum\ Deviation = SIGNED\ MAX(Norm\ Signal_i - 1)$$

The function "SIGNED MAX" refers to the maximum absolute value of the resulting signal (after subtracting 1). In other words, it finds the value that is farthest away from zero, regardless of whether it's positive or negative.

The analysis provides information based on which the relevant operational parameters are selected.

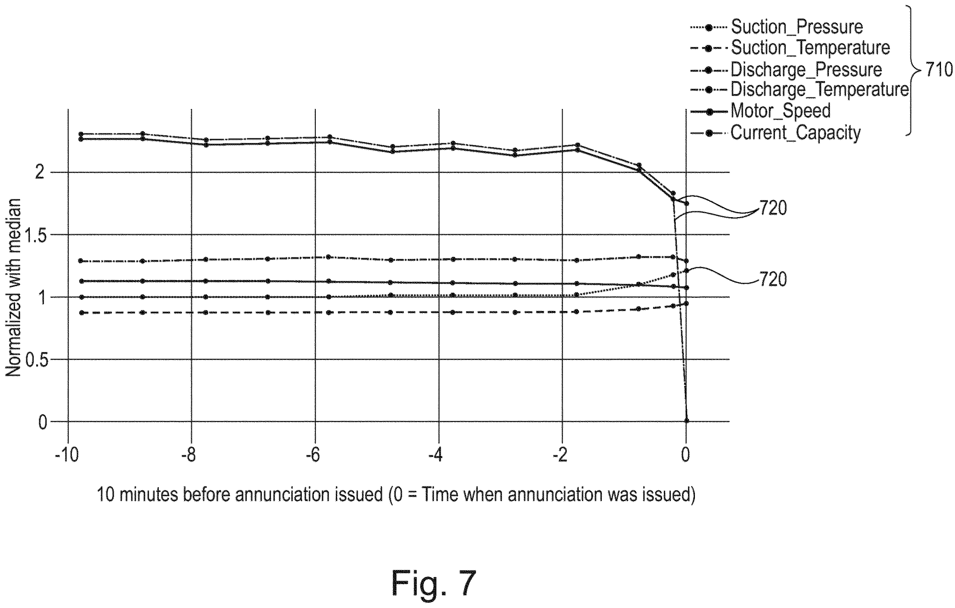

Fig. 7 shows the behavior of multiple relevant operational parameters 710 in a line graph format. The x-axis of the line graph shows the behavior of the relevant operational parameter 710 ten minutes before the fault occurred and the x-axis shows the operational parameter that was normalized with the median. It can be seen that the operational parameters "Current Capacity", "Motor Speed" and "Suction Pressure" change in a significant way at the time the fault occurred. Accordingly, those parameters may be identified as key operational parameters 720. The graph illustrates the behavior of relevant operational parameter 710 and the key operational parameters 720 and emphasizes the value of displaying those parameters in the troubleshooting page 300.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**List of reference signs**

| | |
|---|---|
| 100 | main page |
| 110 | search bar |
| 120 | control panel |
| 130 | information component |
| 140, 145 | tile |
| 140a | red component |
| 140b | yellow component |
| 150 | scroll bar |
| 200 | fault analysis page |
| 210 | shutdown information component |
| 220 | warnings information component |
| 230 | fault history information component |
| 240, 310 | machine control field |

| 250 | date range control field |
|---|---|
| 260 | fault status control field |
| 270, 320 | fault name control field |
| 280 | customer overview option |
| 300 | troubleshooting page |
| 400 | recommendation information component |
| 410a-410d | fault-specific recommendation |
| 420a-420d | skip option |
| 430a-430d | done option |
| 440 | current value |
| 450 | ideal value |
| 500 | operational parameter information component |
| 510 | operational data graph |
| 520 | operational parameters |
| 530 | time range control field |
| 540 | scale control units |
| 550 | parameter scales |
| 610 | operational parameter |
| 620 | relevant operational parameters |
| 710 | relevant operational parameters |
| 720 | key operational parameters |

**Claims**

1. A computer-implemented method for assisting in a fault resolution process for resolving one or more faults at one or more pieces of industrial equipment, the method comprising:
   providing a plurality of troubleshooting information, the plurality of troubleshooting information comprising:

   one or more fault-specific recommendations (410a-410d) configured to assist the fault resolution process;
   for each fault-specific recommendation (410a-410d), a skip option (420a-420d) to indicate that the fault-specific recommendation has been skipped;
   for each fault-specific recommendation (410a-410d), a done option (430a-430d) to indicate that the fault-specific recommendation has been performed;
   selecting at least one operational parameter of a plurality of operational parameters using a first machine learning model;
   displaying, in an operational data graph (510) the at least one operational parameter (520).

2. The method of any one of the preceding claims, wherein providing the plurality of troubleshooting information further comprises:

   providing a machine filter (310) that enables selecting a piece of industrial equipment of the one or more pieces of industrial equipment;
   providing a fault filter (320) that enables selecting a fault (325) of the one or more faults at the selected piece of industrial equipment, wherein, preferably, the one or more fault-specific recommendations (410a-410d) are associated with the selected fault (325).

3. The method of any one of the preceding claims, the method further comprising:

   obtaining troubleshooting feedback information, and
   training a second machine learning model based on the troubleshooting feedback information;
   wherein the second machine learning model is trained to perform one or more of:

   topic modelling;
   name entity recognition;
   sentiment analysis;
   keyword extraction.

4. The method of the preceding claim, wherein the one or more fault-specific recommendations (410a-410d) are based on the output of the trained second machine learning model.

5. The method of any one of the preceding claims, wherein the first machine learning model is trained using one or more of:

    supervised machine learning;
    unsupervised machine learning.

6. The method of claim 3 or 4, wherein the plurality of troubleshooting information further comprising:
confidence information indicating the confidence of the determination made by the second machine learning model.

7. The method of claim 2, wherein the plurality of troubleshooting information further comprises information about one or more of:

    a current value (440) associated with the selected fault (325);
    an ideal value (450) associated with the selected fault (325).

8. The method of any one of the preceding claims, wherein the step of selecting the at least one operational parameter comprises:

    obtaining a plurality of signals associated with a plurality of parameters (610),
    converting each of the plurality of signals into a normed signal to obtain a plurality of normed signals;
    computing for each of the plurality of normed signals a maximum deviation to obtain a plurality of maximum deviation values (620);
    selecting one or more relevant parameters (710) from the plurality of parameters (610) based on the plurality of maximum deviation values (620);
    selecting one or more key parameters (720) as the plurality of operational parameters (520) based on performing further analysis on the plurality of relevant parameters (710).

9. The method of any one of the preceding claims, wherein providing the plurality of troubleshooting information further comprises:

    providing a time range option (530) for selecting a time range;
    wherein the operational data graph (510) adjusts according to the selected time range.

10. The method of any one of the preceding claims, wherein providing the plurality of troubleshooting information further comprises:

    providing a plurality of scale options (540) for selecting one or more of:

        a pressure scale (550);
        a temperature scale (550);
        a capacity scale (550);
        a speed scale (550);
        a power scale (550);

    wherein the operational graph displays (510) the one or more selected scales.

11. The method of any one of the preceding claims, the method further comprising:
providing a plurality of fault analysis information comprising one or more of:

    shutdown information;
    warning information;
    fault history information.

12. The method of claim 11, wherein providing the plurality of fault analysis information further comprises one or more of:

    providing a fault analysis machine option (240);

> providing a fault analysis date range option (250);
> providing a fault analysis fault status option (260);
> providing a fault analysis fault name option (270).

13. A device for assisting in a fault resolution process for resolving one or more faults at one or more pieces of industrial equipment, the device comprising means for performing the method of any one of claims 1 to 12.

14. A system comprising the device of claim 13, the system further comprising:
one or more sensors configured to obtain a plurality of signals associated with a plurality of parameters (610).

15. A computer program comprising instructions which, when executed by a computer, cause the computer to carry out the method of any one of claims 1 to 12.

100

## TOTAL CARE PARTNER

GEA  TOTAL CARE PARTNER  🔔 ⊚ Page Turner ⌄

Customer Overview  110  ✕

🔍 Search  →  120

Customer 。  130  Faults 。  140  140a  145  140b  🕐

150

| | | | |
|---|---|---|---|
| Company A | Pending Shutdowns 1  ⊗ | Pending Warnings 9  ○ | Select Customer |
| Company B | Pending Shutdowns 0  ⊗ | Pending Warnings 5  ○ | Select Customer |
| Company C | Pending Shutdowns 0  ⊗ | Pending Warnings 1  ○ | Select Customer |

# Fig. 1

EP 4 653 968 A1

Fig. 2

14

300

| ≡ GEA | TOTAL CARE PARTNER | ♤ ⊚ Page Turner ⌄ |

Fault **310** **320**
Analysis )Troubleshooting )

⊡ Cooling (Customer
GmbH (Overview)

Machine ( Full name (
(BluAstrum ⌄)(Low Suction ⌄)
500 Press... **325**

**400**

(Omni Link)

**Recommendations** ⓘ

Be aware of Low Suction Pressure of 4,77 bar compared to set 5,07 bar
Please follow the steps below to solve the problem.

| 1. Please check the following Parameters: Oil Pressure, Discharge Pressure, Inlet Temperature | (Skip task)(Done) |
| 2. Check water pump and related water flow | (Skip task)(Done) |
| 3. Check gate valve and related water flow | (Skip task)(Done) |
| 4. Check water filter and clean if necessary | (Skip task)(Done) |

Non of the recommended tasks above solved
the problem. Contact 123456 **500**
Related Operating Data
Data range

(Problem solved)

(last 24 hours ⌄)  ⊙pressure ⊙temp ⊙capacity ⊙speed ⊙amperage ⓘ

−Pending Fault    −Suction Pressure    − CI Pressure

Fig. 3

**Recommendations**

Be aware of Low Suction Pressure of 4,77 bar compared to set 5,07 bar

Please follow the steps below to solve the problem.

| | | |
|---|---|---|
| 1. Please check the following Parameters: Oil Pressure, Discharge Pressure, Inlet Temperature | 420a ( Skip task ) | ( Done ) 430a |
| 2. Check water pump and related water flow | 420b ( Skip task ) | ( Done ) 430b |
| 3. Check gate valve and related water flow | 420c ( Skip task ) | ( Done ) 430c |
| 4. Check water filter and clean if necessary | 420d ( Skip task ) | ( Done ) 430d |

Non of the recommended tasks above solved the problem. Contact 123456

( Problem solved )

Fig. 4

Fig. 5

EP 4 653 968 A1

Fig. 6

Fig. 7

EP 4 653 968 A1

Europäisches
Patentamt

European
Patent Office

Office européen
des brevets

# EUROPEAN SEARCH REPORT

**Application Number**

EP 24 17 7687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 798 841 B1 (ROCKWELL AUTOMATION TECH INC [US]) 28 September 2022 (2022-09-28) * paragraph [0018] - paragraph [0019] * * paragraph [0122] - paragraph [0130] * * figures 1, 47, 48 * * claims 1, 6 * ----- | 1-15 | INV. G05B23/02 |

|  |  |  | TECHNICAL FIELDS SEARCHED (IPC) |
|---|---|---|---|
|  |  |  | G05B |

The present search report has been drawn up for all claims

| Place of search | Date of completion of the search | Examiner |
|---|---|---|
| Munich | 11 November 2024 | Marrone, Fabrizio |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
..........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 17 7687

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | | Publication date | Patent family member(s) | | Publication date |
|---|---|---|---|---|---|
| EP 3798841 | B1 | 28-09-2022 | CN | 112578765 A | 30-03-2021 |
| | | | EP | 3798841 A1 | 31-03-2021 |
| | | | US | 2021096542 A1 | 01-04-2021 |
| | | | US | 2022011752 A1 | 13-01-2022 |

EPO FORM P0459

For more details about this annex : see Official Journal of the European Patent Office, No. 12/82